(19)

**Europäisches Patentamt**
**European Patent Office**
**Office européen des brevets**

(11) **EP 2 272 045 B1**

(12) **EUROPEAN PATENT SPECIFICATION**

(45) Date of publication and mention
of the grant of the patent:
**13.07.2011 Bulletin 2011/28**

(51) Int Cl.:
*G06T 3/00* *(2006.01)*          *G06T 7/00* *(2006.01)*

(21) Application number: **09718697.7**

(86) International application number:
**PCT/US2009/034857**

(22) Date of filing: **23.02.2009**

(87) International publication number:
**WO 2009/114254 (17.09.2009 Gazette 2009/38)**

(54) **REGISTRATION OF 3D POINT CLOUD DATA BY CREATION OF FILTERED DENSITY IMAGES**

REGISTRATION VON 3D-PUNKTWOLKENDATEN DURCH ERZEUGUNG VON GEFILTERTEN DICHTEBILDERN

ALIGNEMENT DE DONNÉES DE NUAGES DE POINTS 3D PAR CRÉATION D IMAGES DE DENSITÉ FILTRÉE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.03.2008 US 46862**

(43) Date of publication of application:
**12.01.2011 Bulletin 2011/02**

(73) Proprietor: **Harris Corporation**
**Melbourne, FL 32919 (US)**

(72) Inventors:
• **MINEAR, Kathleen**
**Palm Bay, Florida 32905 (US)**
• **BLASK, Steven G.**
**Melbourne, Florida 32934 (US)**

(74) Representative: **Schmidt, Steffen**
**Wuesthoff & Wuesthoff**
**Patent- und Rechtsanwälte**
**Schweigerstrasse 2**
**81541 München (DE)**

(56) References cited:
**US-A1- 2007 081 718     US-B1- 6 904 163**

• **Y. POSTOLOV, A. KRUPNIK AND K. MCINTOSH: "Registration of airborne laser data to surface generated by photogrammetric means" INTERNATIONAL ARCHIVES OF PHOTOGRAMMETRY AND REMOTE SENSING, 9 November 1999 (1999-11-09), pages 95-99, XP002527963**
• **ROMAN C ET AL: "A self-consistent bathymetric mapping algorithm" JOURNAL OF FIELD ROBOTICS WILEY USA, vol. 24, no. 1-2, January 2007 (2007-01), pages 23-50, XP002528596 ISSN: 1556-4959**
• **J. A. GONÇALVES: "ORIENTATION OF SPOT STEREOPAIRS BY MEANS OF MATCHING A RELATIVE DEM AND THE SRTM DEM" INTERNATIONAL CALIBRATION AND ORIENTATION WORKSHOP EUROCOW 2006, 25 January 2006 (2006-01-25), XP002527964 Castelldefels, Spain**

**Description**

The inventive arrangements concern registration of point cloud data, and more particularly registration of point cloud data for targets in the open and under significant occlusion.

One problem that frequently arises with imaging systems is that targets may be partially obscured by other objects which prevent the sensor from properly illuminating and imaging the target. For example, in the case of an optical type imaging system, targets can be occluded by foliage or camouflage netting, thereby limiting the ability of a system to properly image the target. Still, it will be appreciated that objects that occlude a target are often somewhat porous. Foliage and camouflage netting are good examples of such porous occluders because they often include some openings through which light can pass.

It is known in the art that objects hidden behind porous occluders can be detected and recognized with the use of proper techniques. It will be appreciated that any instantaneous view of a target through an occluder will include only a fraction of the target's surface. This fractional area will be comprised of the fragments of the target which are visible through the porous areas of the occluder. The fragments of the target that are visible through such porous areas will vary depending on the particular location of the imaging sensor. However, by collecting data from several different sensor locations, an aggregation of data can be obtained. In many cases, the aggregation of the data can then be analyzed to reconstruct a recognizable image of the target. Usually this involves a registration process by which a sequence of image frames for a specific target taken from different sensor poses are corrected so that a single composite image can be constructed from the sequence.

In order to reconstruct an image of an occluded object, it is known to utilize a three-dimensional (3D) type sensing system. One example of a 3D type sensing system is a Light Detection And Ranging (LIDAR) system. LIDAR type 3D sensing systems generate image data by recording multiple range echoes from a single pulse of laser light to generate an image frame. Accordingly, each image frame of LIDAR data will be comprised of a collection of points in three dimensions (3D point cloud) which correspond to the multiple range echoes within sensor aperture. These points are sometimes referred to as "voxels" which represent a value on a regular grid in three dimensional space. Voxels used in 3D imaging are analogous to pixels used to in the context of 2D imaging devices. These frames can be processed to reconstruct an image of a target as described above. In this regard, it should be understood that each point in the 3D point cloud has an individual x, y and z value, representing the actual surface within the scene in 3D.

Aggregation of LIDAR 3D point cloud data for targets partially visible across multiple views or frames can be useful for target identification, scene interpretation, and change detection. However, it will be appreciated that a registration process is required for assembling the multiple views or frames into a composite image that combines all of the data. The registration process aligns 3D point clouds from multiple scenes (frames) so that the observable fragments of the target represented by the 3D point cloud are combined together into a useful image. One method for registration and visualization of occluded targets using LIDAR data is described in U.S. Patent Publication 20050243323. However, the approach described in that reference requires data frames to be in close time-proximity to each other is therefore of limited usefulness where LIDAR is used to detect changes in targets occurring over a substantial period of time. The paper by Postolov et al. "Registration of airborne laser data to surface generated by photogrammetric means", INTERNATIONAL ARCHIVES OF PHOTOGRAMMETRY AND REMOTE SENSING, november 1999, discloses a method for registering 3D point clouds of the same target acquired using different methods.

The invention concerns a method for registration of two or more of frames of three dimensional (3D) point cloud data concerning a target of interest as disclosed in claim 1.

According to one aspect of the invention, the method can include the step of selecting for registration a sub-volume of the 3D point cloud data from each frame which includes less than a total volume of the 3D point cloud data.

The density images for each of the first frame and the second frame include a pair of XY density images which are obtained by setting to zero a z coordinate value of each data point in a 3D point cloud contained in the first and second frame. The density images for each of the first frame and the second frame also include a pair of XZ density images which are obtained by setting to zero a y coordinate value of each data point in a 3D point cloud contained in the first and second frame.

Each of the foregoing density images are filtered to obtain a filtered density image. The filtering includes median filtering, edge enhancement filtering, or both types of filtering. The one or more translation vectors are determined by performing a cross-correlation of the filtered density image obtained from the first frame and the filtered density image obtained from the second frame. Once the cross-correlation is performed the one or more translation vectors is determined based on the location of a peak in the cross-correlation output matrix.

The coarse registration of the 3D point cloud data from the first frame and the second frame is advantageously performed with respect to both the XY plane and in the Z axis direction using a plurality of the translation vectors. Thereafter the method continues by performing a fine registration process on the 3D point cloud data from the first frame and the second frame.

The fine registration process includes several steps. For example, the fine registration process begins by defining two or more sub-volumes within each of the first and second (3D) frames. Thereafter, one or more qualifying ones of the sub-volumes are identified which include selected arrangements of 3D point cloud data. This step is performed calculating a set of eigen values for each of the sub-volumes. Thereafter, a set of eigenmetrics are calculated using the eigen values. The eigen metrics are selected so as to identify sub-volumes containing 3D point clouds that have a blob-like arrangement. This process is continued for both adjacent and non-adjacent scenes, such as frames 1, 2; 1, 3; 1, 4; 2, 3; 2, 4; 2, 5 and so on, where consecutively numbered frames are adjacent, and non consecutively numbered frames are not adjacent.

The method also includes the step of identifying qualifying data points in the qualifying ones of the sub-volumes. The qualifying data points include two or more of pairs of data points. Each pair of data points comprises a first data point in the first frame that most closely matches a position of a corresponding second data point in the second frame.

Once the qualifying data points are identified for all scene pairs (as described above), an optimization routine is simultaneously performed on the 3D point cloud data associated with all of the frames. The optimization routine is used to determine a global rotation, scale, and translation matrix applicable to all points and all frames in the data set. Consequently, a global transformation is achieved rather than a local frame to frame transformation.

It should be understood that there are many optimizations routines available that can be used for a fine registration process. Some are local in the sense that they operate on adjacent frames only. In contrast, the present invention advantageously uses a global transform for fine registration of all frames as once. In this regard, the invention is unlike conventional approaches that do a frame to frame registration for the fine registration process or an average across several frames. Although these conventional approaches are commonly used, they have been found to be inadequate for purposes of producing a satisfactory result.

The global transform that is used with the present invention advantageously collects all the correspondences for each pair of frames of interest. In this regard it should be understood that the term "pairs" as used herein does not refer merely to frames that are adjacent such as frame 1 and frame 2. Instead, pairs can include frames 1, 2; 1, 3, 1, 4, 2, 3; 2, 4; 2, 5 and so on. All of these pair correspondences are then used simultaneously in a global optimization routine in the fine registration step. Parameters that minimize the error between all frames simultaneously are output and used to transform the frames.

Fig. 1 is a drawing that is useful for understanding why frames from different sensors require registration.

Fig. 2 shows an example set of frames containing point cloud data on which a registration process can be performed.

Fig. 3 is a flowchart of a registration process that is useful for understanding the invention.

Fig. 4 is a flowchart showing the detail of the coarse XY registration step in the flowchart of Fig. 3.

Fig. 5 is a flowchart showing the detail of the coarse XZ registration step in the flowchart of Fig. 3.

Fig. 6 is a chart that illustrates the use of a set of eigen metrics.

Fig. 7 is a flowchart showing the detail of a fine registration step in the flowchart of Fig. 3.

FIG. 8 is a set of screen images which shows a projection of selected 3D point cloud data to the XY plane for frames i and j.

FIG. 9 is a set of screen images which show XY density images obtained for frames i and j.

FIG. 10 is a set of screen images showing an XY density image for frame j before and after median filtering.

FIG. 11 is a set of screen images showing an XY density image for frame j before and after Sobel filtering.

FIG. 12 is a composite screen image showing the filtered XY density image for frame i, the filtered XY density image for frame j, and a correlation surface obtained by performing a cross-correlation on the two XY density images.

FIG. 13 is a set of screen images showing a projection of the selected 3D point cloud data to the XZ plane for frame i and frame j.

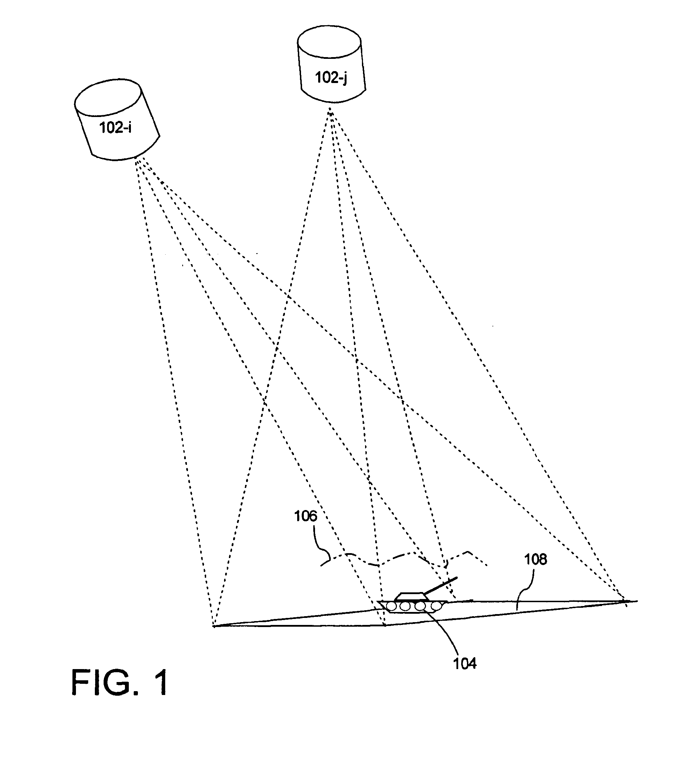

In order to understand the inventive arrangements for registration of a plurality of frames of three dimensional point cloud data, it is useful to first consider the nature of such data and the manner in which it is conventionally obtained. FIG. 1 shows sensors 102-i, 102-j at two different locations at some distance above a physical location 108. Sensors 102-i, 102-j can be physically different sensors of the same type, or they can represent the same sensor at two different times. Sensors 102-i, 102-j will each obtain at least one frame of three-dimensional (3D) point cloud data representative of the physical area 108. In general, the term point cloud data refers to digitized data defining an object in three dimensions.

For convenience in describing the present invention, the physical location 108 will be described as a geographic location on the surface of the earth. However, it will be appreciated by those skilled in the art that the inventive arrangements described herein can also be applied to registration of data from a sequence comprising a plurality of frames representing any object to be imaged in any imaging system. For example, such imaging systems can include robotic manufacturing processes, and space exploration systems.

Those skilled in the art will appreciate a variety of different types of sensors, measuring devices and imaging systems exist which can be used to generate 3D point cloud data. The present invention can be utilized for registration of 3D point cloud data obtained from any of these various types of imaging systems.

One example of a 3D imaging system that generates one or more frames of 3D point cloud data is a conventional LIDAR imaging system. In general, such LIDAR systems use a high-energy laser, optical detector, and timing circuitry to determine the distance to a target. In a conventional LIDAR system one or more laser pulses is used to illuminate a scene. Each pulse triggers a timing circuit that operates in conjunction with the detector array. In general, the system measures the time for each pixel of a pulse of light to transit a round-trip path from the laser to the target and back to the detector array. The reflected light from a target is detected in the detector array and its round-trip travel time is measured to determine the distance to a point on the target. The calculated range or distance information is obtained for a multitude of points comprising the target, thereby creating a 3D point cloud. The 3D point cloud can be used to render the 3-D shape of an object.

In FIG. 1, the physical volume 108 which is imaged by the sensors 102-i, 102-j can contain one or more objects or targets 104, such as a vehicle. However, the line of sight between the sensor 102-i, 102-j and the target may be partly obscured by occluding materials 106. The occluding materials can include any type of material that limits the ability of the sensor to acquire 3D point cloud data for the target of interest. In the case of a LIDAR system, the occluding material can be natural materials, such as foliage from trees, or man made materials, such as camouflage netting.

It should be appreciated that in many instances, the occluding material 106 will be somewhat porous in nature. Consequently, the sensors 102-I, 102-j will be able to detect fragments of the target which are visible through the porous areas of the occluding material. The fragments of the target that are visible through such porous areas will vary depending on the particular location of the sensor 102-i, 102j. However, by collecting data from several different sensor poses, an aggregation of data can be obtained. In many cases, the aggregation of the data can then be analyzed to reconstruct a recognizable image of the target.

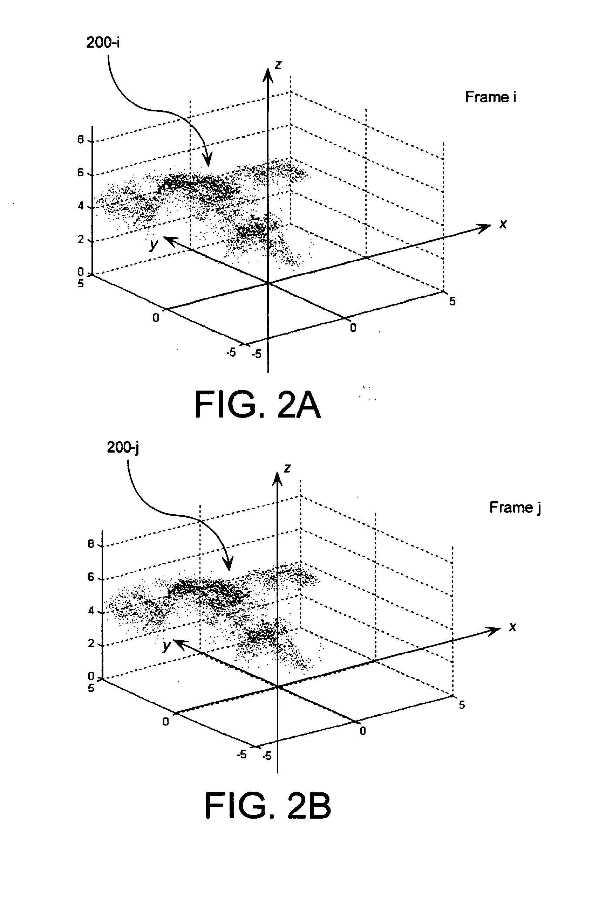

FIG. 2A is an example of a frame containing 3D point cloud data 200-i, which is obtained from a sensor 102-i in FIG. 1. Similarly, FIG. 2B is an example of a frame of 3D point cloud data 200-j, which is obtained from a sensor 102-j in FIG. 1. For convenience, the frames of 3D point cloud data in FIGS. 2A and 2B shall be respectively referred to herein as "frame i" and "frame j". It can be observed in FIGS. 2A and 2B that the 3D point cloud data 200-i, 200-j each define the location of a set of data points in a volume, each of which can be defined in a three-dimensional space by a location on an x, y, and z axis. The measurements performed by the sensor 102-I, 102-j define the x, y, z location of each data point.

In FIG. 1, it will be appreciated that the sensor(s) 102-i, 102-j, can have respectively different locations and orientation. Those skilled in the art will appreciate that the location and orientation of the sensors 102-i, 102-j is sometimes referred to as the pose of such sensors. For example, the sensor 102-i can be said to have a pose that is defined by pose parameters at the moment that the 3D point cloud data 200-i comprising frame i was acquired.

From the foregoing, it will be understood that the 3D point cloud data 200-i, 200-j respectively contained in frames i, j will be based on different sensor-centered coordinate systems. Consequently, the 3D point cloud data in frames i and j generated by the sensors 102-i, 102-j, will be defmed with respect to different coordinate systems. Those skilled in the art will appreciate that these different coordinate systems must be rotated and translated in space as needed before the 3D point cloud data from the two or more frames can be properly represented in a common coordinate system. In this regard, it should be understood that one goal of the registration process described herein is to utilize the 3D point cloud data from two or more frames to determine the relative rotation and translation of data points necessary for each frame in a sequence of frames.

It should also be noted that a sequence of frames of 3D point cloud data can only be registered if at least a portion of the 3D point cloud data in frame i and frame j is obtained based on common subject matter (i.e. the same physical or geographic area). Accordingly, at least a portion of frames i and j will generally include data from a common geographic area. For example, it is generally preferable for at least about 1/3 common of each frame to contain data for a common geographic area, although the invention is not limited in this regard. Further, it should be understood that the data contained in frames i and j need not be obtained within a short period of time of each other. The registration process described herein can be used for 3D point cloud data contained in frames i and j that have been acquired weeks, months, or even years apart.

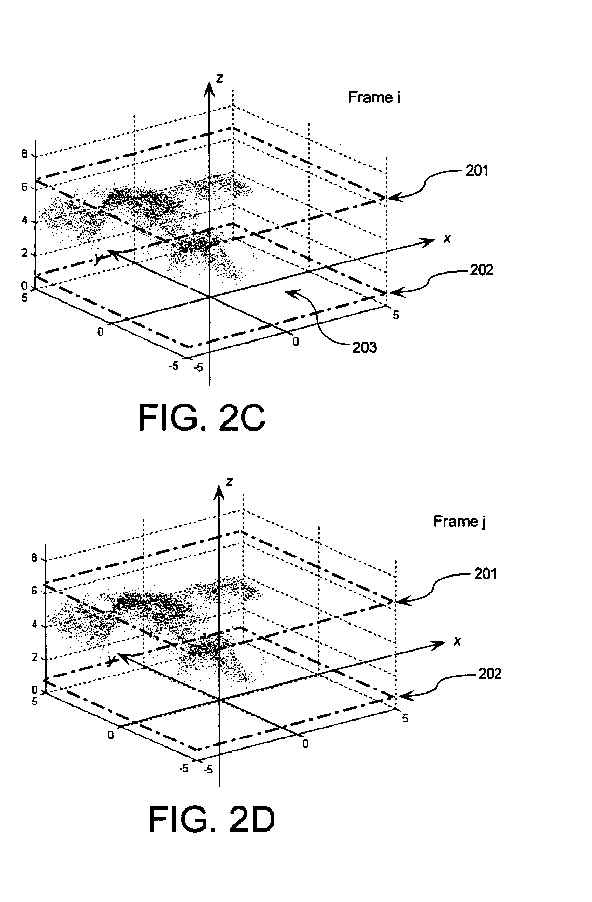

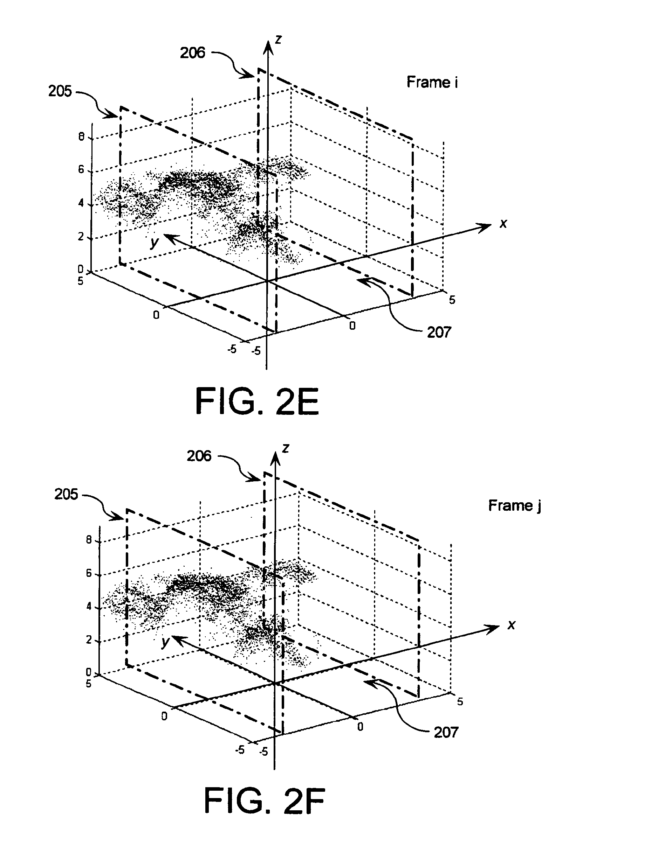

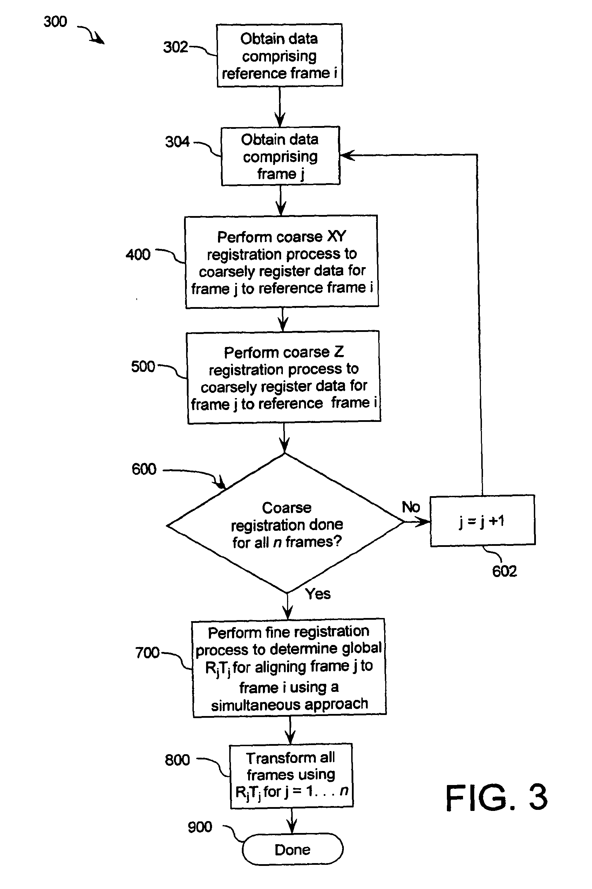

An overview of the process for registering a plurality of frames i, j of 3D point cloud data will now be described in reference to FIG. 3. The process begins in step 302 and continues to step 304. Steps 302 and 304 involve obtaining 3D point cloud data 200-i, 200-j comprising frame i and j, where frame j is designated as a reference frame. This step is performed using the techniques described above in relation to FIGS. 1 and 2. The exact method used for obtaining the 3D point cloud data 200-i, 200-j for each frame is not critical. All that is necessary is that the resulting frames contain data defining the location of each of a plurality of points in a volume, and that each point is defined by a set of coordinates corresponding to an x, y, and z axis.

The process continues in step 400, which involves performing a coarse registration of the data contained in frame i and j with respect to the x, y plane.

Thereafter, a similar coarse registration of the data in frames i and j is performed in step 500 with respect to the x, z plane. These coarse registration steps will be described in more detail below. However, it should be noted that the coarse registration process described herein advantageously involves selection of one particular frame be designated as a reference frame to which all other frames will be aligned. In FIG. 3, frame i shall be designated as the reference frame, and the value of j is iterated to perform a coarse registration of all n frames.

In step 600, a determination is made as to whether coarse registration has been completed for all n frames in a sequence of frames which are to be registered. If not, then the value of j is incremented in step 602 and the process returns to step 304 to acquire the point cloud data for the next frame j. Thereafter, steps 304, 400, 500, 600 and 602 are repeated until registration is completed for all n frames. At that point, the process will proceed to step 700.

In step 700, all coarsely adjusted frame pairs from the coarse registration process in steps 400, 500 and 600 are processed simultaneously to provide a more precise registration. Step 700 involves simultaneously calculating global values of $R_j T_j$ for all n frames of 3D point cloud data, where $R_j$ is the rotation vector necessary for aligning or registering all points in each frame j to frame i, and $T_j$ is the translation vector for aligning or registering all points in frame j with frame i.

Step 800 is the final step in the registration process. In step 800, the calculated values for $R_j$ and $T_j$ for each frame as calculated in step 700 are used to translate the point cloud data from each frame to a common coordinate system. For example, the common coordinate system can be the coordinate system of frame i. At this point the registration process is complete for all frames in the sequence of frames. For example, a sensor may collect 25 to 40 consecutive frames consisting of 3D measurements during a collection interval. All of these frames can be aligned with the process described in FIG. 3. The process thereafter terminates in step 900 and the aggregated data from a sequence of frames can be displayed.

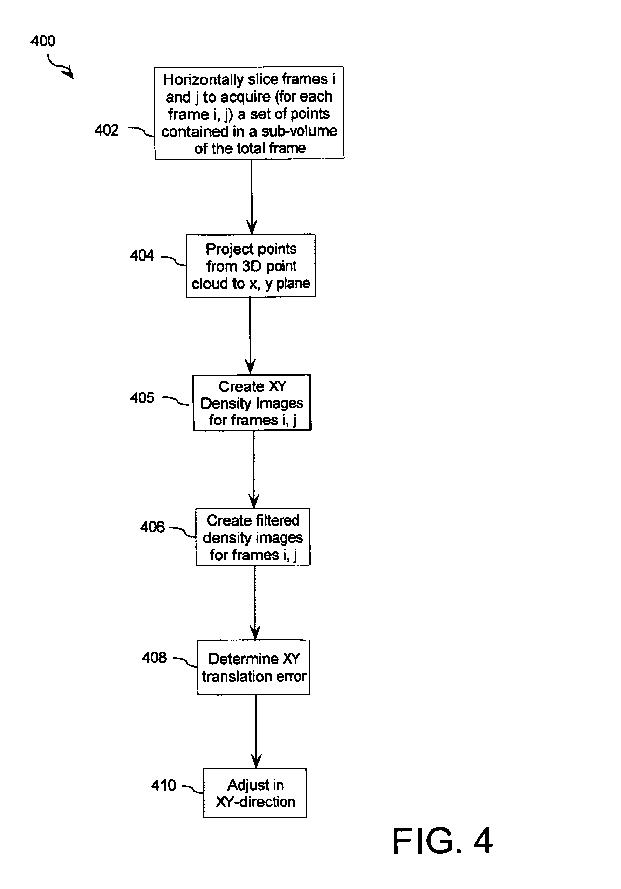

Steps 400, 500, 700 and 800 in FIG. 3 will now be described in further detail. Referring now to FIG. 4, the coarse x, y registration in step 400 can include a plurality of steps, beginning with step 402. In step 402 each frame i, j is sliced horizontally (i.e., parallel to the plane defined by the x, y axes in FIG. 2) so that a portion of the total volume comprising the 3D point clouds 200-i, 200-j is selected. This concept is illustrated in FIGS. 2C and 2D which show planes 201, 202 forming sub-volume 203 in frames i, j. This sub-volume 203 is advantageously selected to be a volume that is believed likely to contain a target of interest and which excludes extraneous data which is not of interest.

In one embodiment of the invention, the sub-volume of the frame that is selected can include 3D point cloud data points corresponding to locations which are slightly above the surface of the ground level and extending to some predetermined altitude or height above ground level. For example, a sub-volume ranging from z = 0.5 meters above ground-level, to z = 6.5 meters above ground level, is usually sufficient to include most types of vehicles and other objects on the ground. Still, it should be understood that the invention is not limited in this regard. In other circumstances it can be desirable to choose a sub-volume that begins at a higher elevation relative to the ground so that the registration is performed based on only the taller objects in a scene, such as tree trunks. For objects obscured under tree canopy, it is desirable to select the sub-volume that extends from the ground to just below the lower tree limbs.

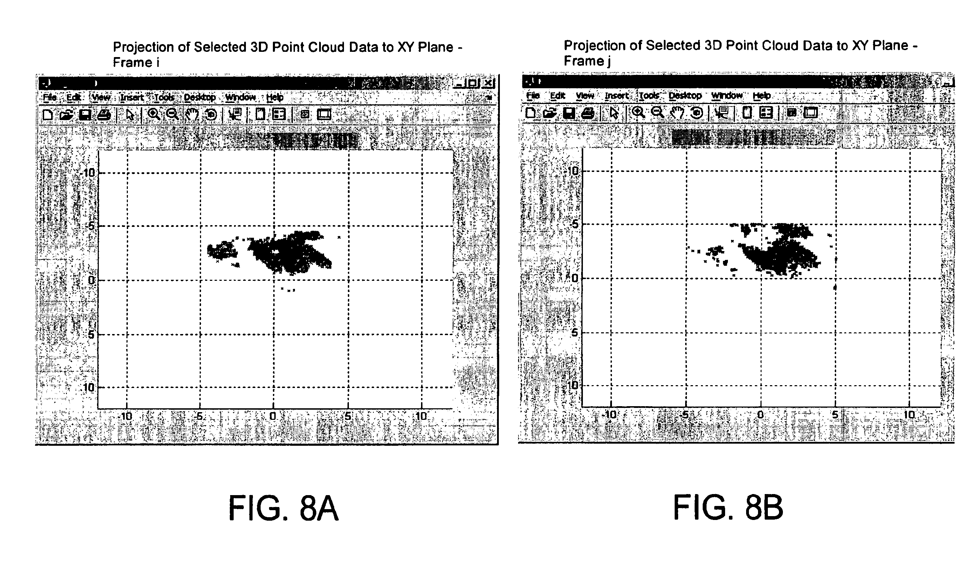

In step 404, the various data points that comprise the 3D point cloud 200-i, 200-j are projected to their respective x, y plane from their location in the point clouds. Stated another way, the x and y values of the data points in each frame remain the same, while the z value for each of the data points is set to zero. The result of step 404 is to convert each frame i, j comprised of the 3D point cloud data to a 2 dimensional frame in the x, y plane (XY frame). FIG. 8A shows a projection to the XY plane of selected 3D point cloud data for frame i. FIG. 8B shows a projection to the XY plane of selected 3D point cloud data for frame j. In this regard, it should be understood that the selected 3D point cloud data will in each case be the 3D point cloud data set selected in step 402.

In step 405, the projection of the 3D point cloud data to the XY plane for frames i and j is used to generate XY density images. According to one embodiment, the XY density images are created by using a window of size 5*voxelsize x 5*voxelsize. A voxel is a cube of scene data.. Here, the term "voxelsize" refers to the length of an edge of a single cubic voxel. For instance, a single voxel can have a size of $(0.2 \text{ m})^3$ based upon the LIDAR sensor resolution. In that case, the voxelsize would be 0.2 m, and the filter window has dimensions 1.0 m x 1.0 m This window is used to process the 2D XY projection of the volumetric data (Z=0). The voxelsize*numvoxels (minus any filter edge effects) will equal the width of the density image, Here, the term numvoxel refers to the number of voxels that are aligned in a direction corresponding to a width dimension of the density image. Notably, the width of the density image is very close to the width of 2D XY projection image after partial voxels and edge effects are removed.

The window described above is passed over the 2D projection and the number of hits in the window (density) is used as value at that window location. The voxelsize is based on the processing resolution of the data and is in meters. Note that the creation of density images as described herein gives less 'weight' to sparse voxels, i.e. those voxels with few 'hits'. Those regions are not significant in the coarse registration process and may include sparse foliage (bushes, low-lying limbs). Also they are not as stable over time as rocks and tree trunks.

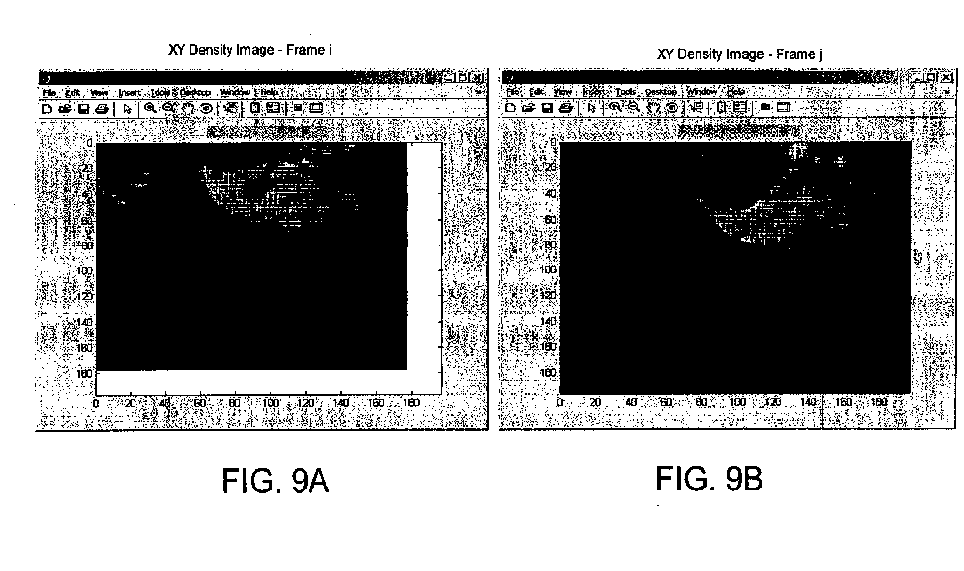

Using the procedure described above, an XY density image for frame i is obtained, and an XY density image for frame j is obtained. FIG. 9A shows an XY density image obtained from the XY projection of 3D point cloud data for frame i. FIG. 9B shows an XY density image obtained from the XY projection of point cloud data for frame j

The purpose of the XY density images as described herein is to allow a subsequently applied filtering process to find edge content of the 2D shapes that will be registered. It should be noted that the approach described herein, involving filtering of a density image, is the preferred method for registration of for certain types of objects appearing in an image. In particular, this process works well for objects which are out in the open (i.e. not occluded or only minimally occluded) since it is simpler to apply computationally, versus an eigenmetric method. Based on the limited number of data points within each frame for objects that are heavily occluded, one skilled in the art might anticipate that this approach would not work with more heavily occluded objects. However, the registration technique has also been found to work unexpectedly well for objects under tree canopies. If the slice of data samples from a 3D image is carefully selected, enough shape content is available to perform the correlation and therefore complete the coarse registration of the 'incomplete' frames as described below. In this regard, the slice of data points is preferably selected in such instances so as to include only data points between ground level to just under the lower tree limbs.

In step 406, the process continues with one or more filtering steps to create a filtered XY density image i and a filtered XY density image j respectively from the XY density image for frame i and the XY density image for frame j. In this regard, step 406 includes (1) performing median filtering of the XY density images i, j, and (2) performing Sobel edge filtering of the median filter XY density images i, j. These filtering steps will now be described in greater detail.

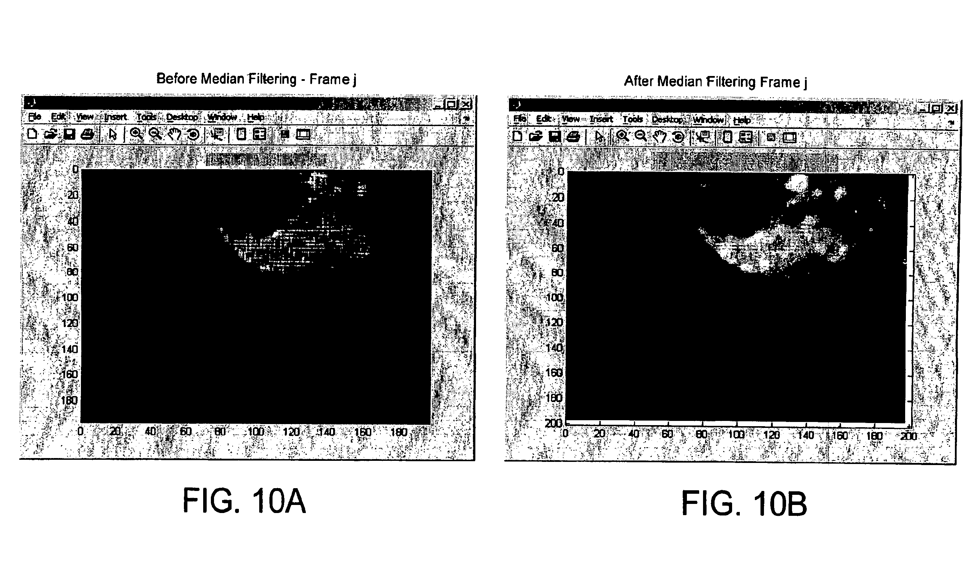

The median filter step is performed primarily to reduce noise in the XY density images i, j. Median filters are well known in the art. Accordingly, the process will not be described here in detail. In general, however, median filtering involves selection of a filter mask that is a certain number of pixels in height and width. The exact size of the mask can vary according to the particular application. In the present case, a filter mask having a size of 5 pixels high x 5 pixels wide has been found to provide suitable results. However, the invention is not limited in this regard. In practice, the mask is slid over the image and the center pixel contained within the mask is examined to determine if it has similar values as compared to its neighboring pixels. If not, this is often an indication that the particular pixel has been corrupted by noise. Accordingly, the median filter will replace the center pixel value with the median of the remaining pixels values under the mask. The median is calculated by first sorting all the pixel values under the mask into numerical order and then replacing the pixel being considered with the middle pixel value. FIG. 10A shows an XY density image for frame j before median filtering. FIG. 10B shows an XY density image for frame j after median filtering.

The preparation of the filtered density images also involves edge filtering. Those skilled in the image processing field will readily appreciate that for the purpose of aligning two images, it can be helpful to identify the edges of objects contained in the image. For example, detecting the edges of objects forming an image will substantially reduce the total amount of data contained in the image. Edge detection preserves the important structural properties of an image but will remove information which is not generally useful for purposes of image alignment. Accordingly, it is advantageous to perform edge filtering on the XY density images after median filtering has been performed.

As used herein, the term "edge" generally refers to areas within a two-dimensional image where there exist strong intensity contrasts. In such areas, there is usually a rapid variation in intensity as between adjacent pixels. In this regard, it should be understood that while there are many different ways to perform edge detection, and all such methods are intended to be included within the scope of the present invention. For the purpose of the present invention, edge filtering can include any technique now known, or which is discovered in the future, which can be used for detecting or emphasizing edges within an image.

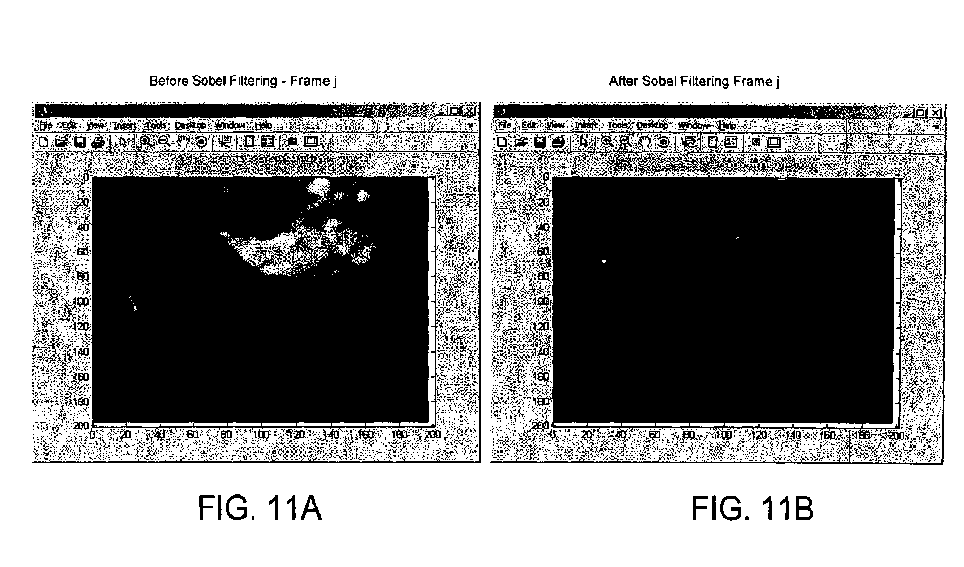

According to a preferred embodiment, edge filtering in the present invention can be carried out using a conventional Sobel filter. In a Sobel filtering process, a Sobel operator is used to determine a 2-D spatial gradient measurement on an image. Conventional techniques for Sobel filter processing are well known. Accordingly, the Sobel filtering technique will not be described here in great detail. Typically, however, a first convolution mask 3 pixels high and 3 pixels wide is used for determining a gradient in the x-direction. A second convolution mask of the same size is used for determining a gradient in the $\gamma$-direction. In this regard, it should be understood that each of the first and second convolution masks will be much smaller than the actual XY density image. The masks are each slid over the image, manipulating one 3x3 group of pixels at a time in accordance with the Sobel operator. The first convolution mask highlights the edges in a first direction while the second convolution mask highlights the edges in a second direction, transverse to the first direction. As used herein, the term "highlight" can refer to any image or data enhancement that allows edges of point clouds to be more clearly defined. The result of the process is edges that are highlighted in directions aligned with both the x and y axis. FIG. 11A shows the XY density image after median filtering, but before Sobel filtering. FIG. 11B shows the XY density image after Sobel filtering. The filtered XY density image is shown in FIG. 11B, which includes the median filtering and the edge enhancement effect resulting from the Sobel filtering.

In step 408, an XY translation error is determined. The XY translation error is a shift or offset in the x, y plane which exists as between the image data represented in the filtered XY density image i and the image data represented by the filtered XY density image j. The XY translation error can be defined by a vector which identifies the direction and distance of the shift or offset as between the two filtered XY density images i, j. One method for determining the XY translation error is by performing a cross-correlation of the filtered density images i, j. It is well known in the art that the cross-correlation of two images is a standard approach which can be used for identifying similarities as between two images. If two images contain at least some common subject matter, the cross-correlation process will generally result in a peak in the correlation value at a location which corresponds to the actual XY translation error.

Notably, for frames that are taken consecutively, there is little rotation variation. In other words, there is little rotational variation in the point of view of the imaging device relative to the scene being imaged. In such circumstances, a correlation method that is not invariant to rotation as between the scenes contained in two images can be used. For example a conventional normalized correlation method can be used for this purpose.

Still, it should be understood that a normalized correlation is generally only usable for rotational variations of two or three degrees. For frames taken at substantially different times (e.g. 6 months apart) and from different orientations, the 2D projections (in the case of the preferred mode for objects in the open) and the 3D volumes (in the case of the preferred mode for occluded objects under trees, there can be significant rotation errors using such conventional normalized correlation processes. This problem can be addressed by collecting supporting data to allow for adjustment of the orientation of the data. However, where such data is not available or simply not used, a correlation process which is invariant to rotation is preferred. Rotationally invariant correlation processes are known in the art.

In the present invention, we calculate the normalized cross-correlation for the filtered density images i, j. In this regard, it can be convenient to display the resulting output of the cross-correlation calculation as a surface plot. The peak of the cross-correlation surface plot occurs where the XY filtered density images for frame i and frame j are best correlated. Significantly, the correlation peak location will identify a shift in the x, y plane as between frames i and j. The actual XY translation error vector is easily determined from the peak location. Simply it is the delta x and delta y between the two frames calculated from the center of the frames. The adjustments are applied while holding the reference frame constant. If there are only two frames, either can be considered the reference. For a sequence of frames (as is collected for objects located under a tree canopy, for instance) the center frame works best as the reference frame.

The correlation process described herein with respect to step 408 can include a Normalized Cross Correlation (NCC) process performed with respect to filtered XY density images i, and j. The use of NCC processes for registration of two dimensional images is well known in the art. Accordingly, the NCC process will not be described here in detail. In general, however, the cross-correlation of two images i and j is defined as the product:

$$\sum_{p_i \in w_i} \sum_{p_j \in w_j} p_i \otimes p_j$$

where $pi$ is the pixel index running over the domain of interest $w_i$ in the filtered XY density image i, and similarly $p_j$ a running 2-dimensional index over the domain of interest $w_j$ in the XY density image j. It is known in the art that the cross-correlation product denoted as $\otimes$ can be defined by various different functions, depending on the purpose of the cross-correlation. However, one example of typical product definition would be as follows:

$$p_i \otimes p_j = \sum_{w_i, w_j} (p_i p_j)$$

It will be appreciated by those skilled in the art that the foregoing product definition will provide an indication how similar are two regions of interest contained in two different images. In this regard, when the cross correlation value is at a peak where the best correlation is obtained. Of course, the invention is not limited in this regard and any other NCC process can be used provided that it produces a result which identifies a translation error as between the XY density image i and the XY density image j.

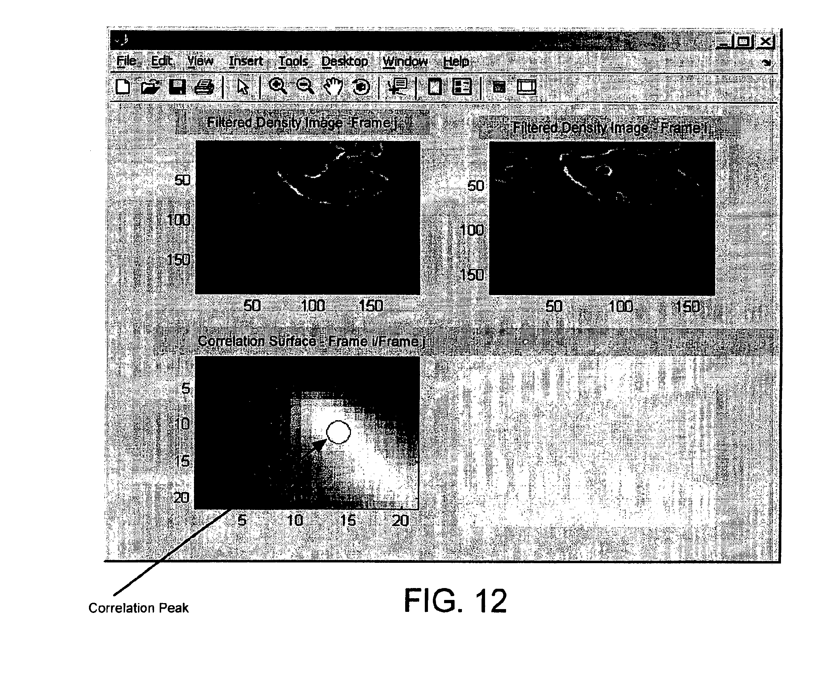

FIG. 12 is a composite set of screen images showing the filtered density image obtained from frame i, the filtered density image obtained from frame j, and a correlation surface obtained by performing a normalized cross-correlation on these filtered density images. The correlation surface includes a correlation peak, which is identified in the figure.

In an alternative embodiment of the invention, a different approach can be used in step 408 in place of the NCC process to determine the XY translation error. In particular, the NCC can be replaced by a similarity metric which is rotationally invariant. As will be understood by those skilled in the art, any suitable similarity metric can be used for this purpose, provided that it is rotationally invariant, or is at least less sensitive to rotational variations as compared to the NCC process. A rotationally invariant similarity metric can be particularly advantageous in those situations where the pose of sensor 102-i was rotated with respect to sensor 102-j when the frames i and j were obtained.

Regardless of the particular technique used to determine the XY translation error in step 408, the result will be some translation error vector in the x, y plane which defines the XY translation error as between the filtered density image i and the filtered density image j. Once this translation error vector has been determined, the process can continue on to step 410. In step 410, the translation error vector is used to provide a coarse adjustment of the position of the data points in the frames i and j so that they are approximately aligned with each other, at least with respect to their position in the x, y plane. The process then continues to step 500, where the frames i, j after coarse alignment in the x, y plane is complete, are passed on for coarse alignment in the z direction.

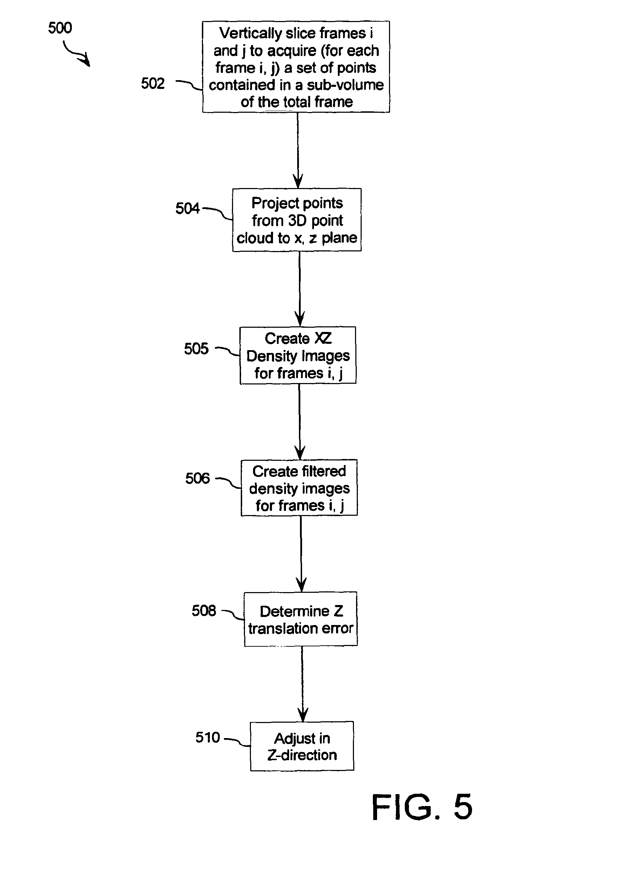

Referring now to the flowchart in FIG. 5, it can be observed that the coarse z registration in step 500 can also include a plurality of steps 502, 504, 506, 508 and 510. These steps are generally similar to steps 402, 404, 406, 408 410 in FIG. 4, except that in FIG. 5, the coarse registration is performed for the z direction instead of in the x, y plane.

Referring now to FIG. 5, the coarse registration in the z direction in step 500 can begin with step 502. In step 502 each frame i, j is sliced vertically (i.e., parallel to the plane defined by the x, z axes) so that a portion of the total volume comprising the 3D point cloud 200-i, 200-j is selected. This concept is illustrated in FIGS. 2E and 2F which show planes 203, 204 forming sub-volume 205 in frames i, j. This sub-volume 205 is advantageously selected to be a volume that is believed likely to contain a target of interest. In one embodiment of the invention, the sub-volume 205 of the frame i, j that is selected can include 3D point cloud data points corresponding to locations which are spaced a predetermined distance on either side of the plane defined by the x, z axes in FIG. 2. For example, a sub-volume ranging from y = -3 meters to y = + 3 meters can be a convenient sub-volume for detection of vehicles and other objects on the ground. Still, it should be understood that the invention is not limited in this regard. In other circumstances it can be desirable to choose a sub-volume that extends a greater or lesser distance away from the plane defined by the x, z axes.

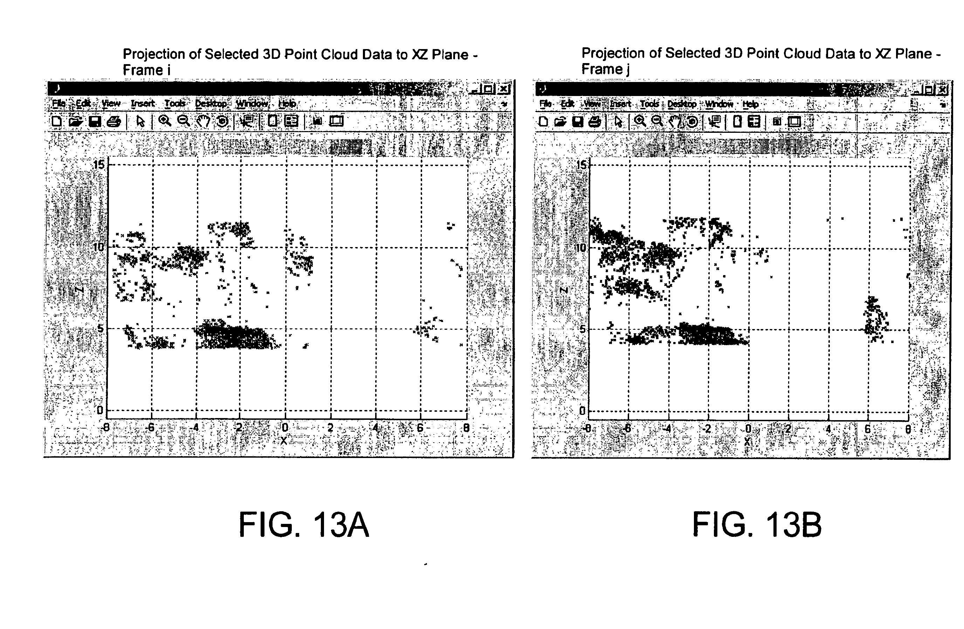

In step 504, the method continues by projecting the various data points that comprise the 3D point cloud 200-i, 200-j onto the x, z plane from their location in the point cloud. Stated another way, the x and z values of the data points remain the same, while the y value for each of the data points is set to zero. The result of step 504 is to convert each frame i, j comprising the 3D point cloud data to a 2 dimensional frame in the x, z plane (XZ frame). FIG. 13A is a projection to the x, z plane of the selected 3D point cloud data from frame i. FIG. 13B is a projection to the x, z plane of the selected 3D point cloud data from frame j.

In step 505, the projection of the 3D point cloud data to the XZ plane for frames i and j is used to generate XZ density images. The XZ density images are generated in a manner similar to the one described above with regard to the XY density mages, except that in this instance the value of Y is set to zero. In this way, an XZ density image for frame i is obtained, and an XZ density image for frame j is obtained.

In step 506, the process continues by creating filtered XZ density image i and filtered XZ density image j. These filtered XZ density images are respectively created from the XZ density image for frame i and the XZ density image for frame j. Creation of the filtered XZ density images i, j in step 506 actually involves at least two steps. Briefly, step 506 includes (1) performing median filtering of the XZ density images i, j, and (2) performing Sobel edge filtering of the median filter XZ density images i, j. These intermediate steps were described above in detail with respect to FIG. 4. Accordingly, that description will not be repeated here.

In step 508, a coarse determination of the Z translation error is determined. The Z translation error is a shift or offset in the z axis direction which exists as between the image data represented in the filtered XZ density image i and the image data represented by the filtered XZ density image j. The Z translation error can be defined by a vector which identifies the z direction shift or offset as between the two filtered XZ density images i, j. One method for determining the Z translation error is by performing an NCC operation on the filtered XZ density images i, j in a manner similar to that previously described with respect to step 408. Alternatively, instead of using the NCC technique for determining the Z translation error, other types of similarity metrics can also be used. In this regard, it will be appreciated that similarity metrics that are rotationally invariant can be advantageous, particularly in those situations where the pose of sensor 102-i was rotated with respect to sensor 102-j when the frames i and j were obtained.

Regardless of the particular technique used to determine the Z translation error in step 508, the result will be some vector which defines the Z translation error as a shift in the Z direction as between the filtered XZ density image i and the filtered XZ density image j. Once this translation error vector has been determined, the process can continue on to step 510. In step 510, the Z translation error vector is used to provide a coarse adjustment of the position of the data points in the frames i and j so that they are approximately aligned with each other with respect to their position in the x, z plane. Thereafter, the process continues on to step 600 (See FIG. 3).

The process described above for frames i, j comprising the 3D point cloud data is repeated for a plurality of pairs of frames comprising a set of 3D point cloud frames (frame set). The process can begin with adjacent frames 1 and 2, where frame 1 is used as a reference frame (i =1) to which other frames are aligned. However, it can be advantageous to begin the coarse registration process using a frame in the middle of a frame set as the reference frame. Stated differently, if we have 25 frames, frame 13 can be used as a reference frame (i =13). The coarse registration can be used to align frame 14 to frame 13, frame 15 can be aligned with the coarsely aligned frame 14, and so on. Similarly, in the other direction frame 12 can be aligned to frame 13, frame 11 can be aligned to coarsely aligned frame 12, and so on. Those skilled in the art will appreciate that this approach would require some minor modification of the flowchart in FIG. 3 since iteration of frame j in step 602 would no longer be monotonic.

Referring once again to FIG. 3, it will be recalled that a fine registration process is performed in step 700 following the coarse registration process in steps 400, 500 and 600. Those skilled in the art will appreciate that there are a variety of conventional methods that can be used to perform fine registration for 3D point cloud frames i, j, particularly after the coarse registration process described above has been completed. Any such fine registration process can be used with the present invention. For example, a simple iterative approach can be used which involves a global optimization routine. Such an approach can involve finding x, y and z transformations that best explain the positional relationships between the data points in frame i and frame j after coarse registration has been completed. In this regard, the optimization routine can iterate between finding the various positional transformations of data points that explain the correspondence of points in the frames i, j, and then finding the closest points given a particular iteration of a positional transformation. Various mathematical techniques that are known in the art can be applied to this problem. For example, one such mathematical technique that can be applied to this problem is described in a paper by J. Williams and M. Bennamoun entitled "Simultaneous Registration of Multiple Point Sets Using Orthonormal Matrices" Proc., IEEE Int. Conf. on Acoustics, Speech and Signal Processing (ICASSP '00), the disclosure of which is incorporated herein by reference.

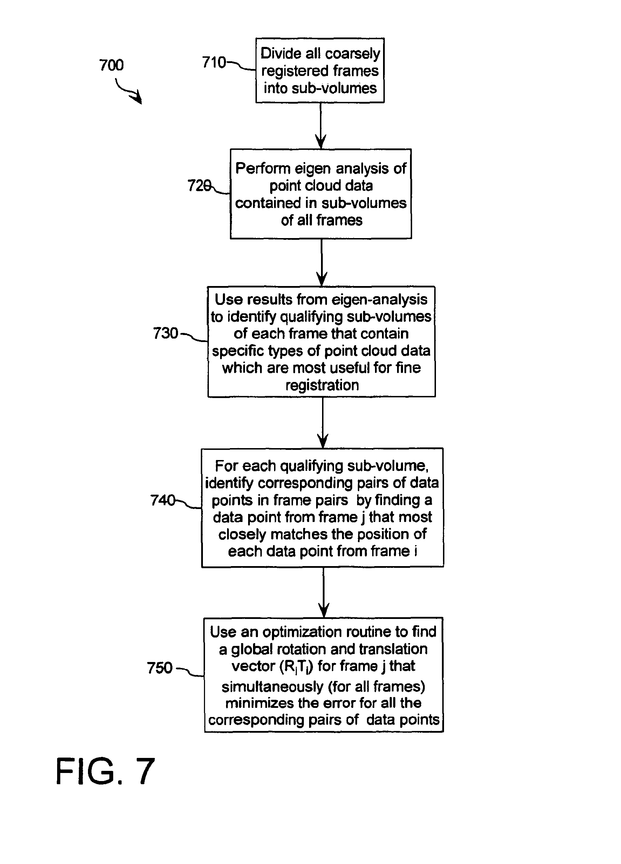

Referring now to FIG. 7 fine registration step 700 can include a number of steps, beginning with step 710. In step 710, frame i and frame j are each subdivided into a plurality of sub-volumes. For the purpose of the fine registration process, individual sub-volumes can be selected that are considerably smaller in total volume as compared to the entire volume of frame i and frame j. For example, in one embodiment the volume comprising each of frame i and frame j can be divided into 16 sub-volumes. The exact size of the sub-volume can be selected based on the anticipated size of selected objects appearing within the scene.

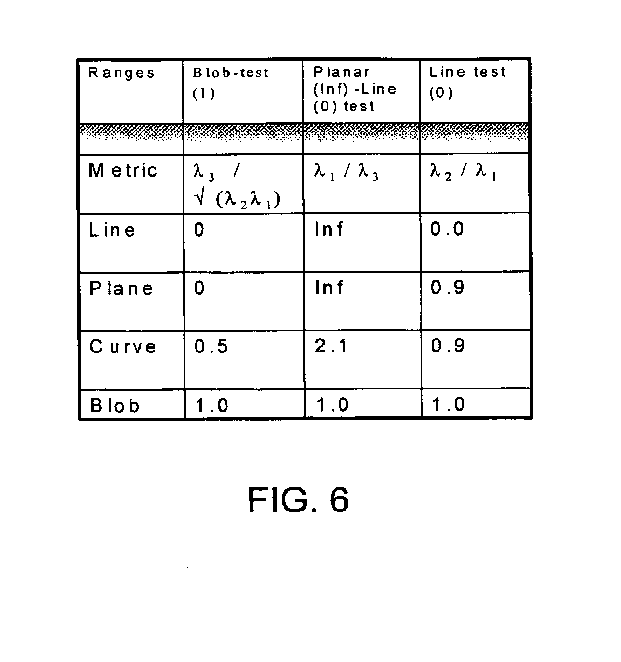

In step 720 the process continues by performing an eigen analysis to determine a set of eigen values $\lambda_1$, $\lambda_2$, and $\lambda_3$ for each of the sub-volumes defined in step 710. It is well known in the art that an eigen analysis can be used to provide a summary of a data structure represented by a symmetrical matrix. In this case, the symmetrical matrix used to calculate each set of eigen values is selected to be the point cloud data contained in each of the sub-volumes. Each of the point cloud data points in each sub-volume are defined by a x,y and z value. Consequently, an ellipsoid can be drawn around the data, and the ellipsoid can be defined by the three 3 eigen values, namely $\lambda_1$, $\lambda_2$, and $\lambda_3$. The first eigenvalue is always the largest and the third is always the smallest. We are looking for structure only at this point. For example, an object such as a truck or tree trunks. We can calculate the eigen metrics using the equations in FIG. 6, and based on knowing which eigenvalue is largest and smallest.

The methods and techniques for calculating eigen values are well known in the art. Accordingly, they will not be described here in detail. In general, however the data in a sub-volume consists of a list of XYZ points. An eigenvalue decomposition is performed on the data yielding the eigenvalues with $\lambda_1$ being the largest. Our frames were collected sequentially and therefore orientation between adjacent frames was similar. Consequently, each eigen value $\lambda_1$, $\lambda_2$, and $\lambda_3$ will have a value of between 0 and 1.0

The eigenmetrics are calculated using the table in FIG. 6 to determine the structure of the point cloud in that sub-volume. The coarse alignment previously performed for each of the frames of 3D point cloud data is sufficient such that corresponding sub-volumes from each frame can be expected to contain data points associated with corresponding structure or objects contained in a scene.

As noted above, eigen values are particularly useful for characterizing or summarizing a data structure that is represented by a symmetrical matrix. In the present invention, the eigen values $\lambda_1$, $\lambda_2$, and $\lambda_3$ are used for computation of a series of metrics which are useful for providing a measure of the shape formed by a 3D point cloud within a sub-volume. For example, the table in FIG. 6 identifies three metrics that can be computed and shows how they can be used for identifying lines, planes, curves, and blob-like objects. A blob-like point cloud can be understood to be a three dimensional ball or mass having an amorphous shape. Accordingly, blob-like point clouds as referred to herein generally do not include point clouds which form a straight line, a curved line, or a plane.

Referring again to FIG. 6, three metrics M1, M2 and M3 which are computed using the eigen values $\lambda_1$, $\lambda_2$, and $\lambda_3$ are as follows:

$$(1) \qquad M1 = \frac{\lambda_3}{\sqrt{\lambda_2 \lambda_1}}$$

$$(2) \qquad M2 = \lambda_1 / \lambda_3$$

$$(3) \qquad M3 = \lambda_2 / \lambda_1$$

When the values of M1, M2 and M3 are all approximately equal to 1.0, this is an indication that the sub-volume contains a blob-like point cloud as opposed to a planar or line shaped point cloud. For example, when the values of M1, M2, and M3 for a particular sub-volume are all greater than 0.7, it can be concluded that the sub-volume has a blob-like point cloud structure. Still, those skilled in the art will appreciate that the invention is not limited in this regard. Moreover, those skilled in the art will readily appreciate that the invention is not limited to the particular metrics shown. Instead, any other suitable metrics can be used, provided that they allow blob-like point clouds to be distinguished from point clouds that define straight lines, curved lines, and planes.

In step 730, the results of the eigen analysis and the table in FIG. 6 are used for identifying qualifying sub-volumes of frame i, j which can be most advantageously used for the fine registration process. As used herein, the term "qualifying sub-volumes" refers to those sub-volumes defined in step 710 that the eigen metrics indicate contain a blob-like point cloud structure. It can be advantageous to further limit qualifying sub-volumes to those that include a sufficient amount of data or content. For example, qualifying sub-volumes can be limited to those with at least a predetermined number of data points contained therein. This process is performed in step 730 for a plurality of scene pairs comprising both adjacent and non-adjacent scenes represented by a set of frames. For example, scene pairs can comprise frames 1, 2; 1, 3; 1, 4; 2, 3; 2, 4; 2, 5 and so on, where consecutively numbered frames are adjacent, and non-consecutively numbered frames are not adjacent.

Once the qualifying sub-volumes that are most useful for registration purposes have been selected, the process continues with step 740. More particularly, in step 740, the process continues by identifying, for each scene pair in the data set, corresponding pairs of data points that are contained within the qualifying sub-volumes. This step is accomplished by finding data points in a qualifying sub-volume of one frame (e.g. frame j), that most closely match the position or location of data points from the qualifying sub-volume of the other frame (e.g. frame i). The raw data points from the qualifying sub-volumes are used to find correspondence between frame pairs. Point correspondence between frame pairs can be found using a K-D tree search method. This method, which is known in the art, is sometimes referred to as a nearest neighbor search method.

In step 750, an optimization routine is simultaneously performed on the 3D point cloud data associated with all of the frames. The optimization routine is used to determine a global rotation, scale, and translation matrix applicable to all points and all frames in the data set.

Consequently, a global transformation is achieved rather than a local frame to frame transformation. More particularly, an optimization routine is used find a rotation and translation vector $R_i T_i$ for each frame j that simultaneously minimizes the error for all the corresponding pairs of data points identified in step 740. The rotation and translation vector is then used for all points in each frame j so that they can be aligned with all points contained in frame i. There are several optimization routines which are well known in the art that can be used for this purpose. For example, the optimization routine can involve a simultaneous perturbation stochastic approximation (SPSA). Other optimization methods which can be used include the Nelder Mead Simplex method, the Least-Squares Fit method, and the Quasi-Newton method. Still, the SPSA method is preferred for performing the optimization described herein. Each of these optimization techniques are known in the art and therefore will not be discussed here in detail

A person skilled in the art will further appreciate that the present invention may be embodied as a data processing system or a computer program product. Accordingly, the present invention may take the form of an entirely hardware embodiment, an entirely software embodiment or an embodiment combining software and hardware aspects. The present invention may also take the form of a computer program product on a computer-usable storage medium having computer-usable program code embodied in the medium. Any suitable computer useable medium may be used, such as RAM, a disk driver, CD-ROM, hard disk, a magnetic storage device, and/or any other form of program bulk storage.

Computer program code for carrying out the present invention may be written in Java®, C++, or any other object orientated programming language. However, the computer programming code may also be written in conventional procedural programming languages, such as "C" programming language. The computer programming code may be written in a visually oriented programming language, such as VisualBasic.

**Claims**

1. A method for registration of a plurality of frames of three dimensional (3D) point cloud data concerning a target of interest, comprising:

    acquiring at least a first frame and a second frame, each containing 3D point cloud data collected for a selected object;
    creating a density image for each of said first frame and said second frame respectively by (a) projecting said 3D point cloud data from each of said first frame and said second frame to a two dimensional (2D) plane so as to obtain a 2D frame of 2D image data points, and (b) passing a window over said 2D frame of said 2D image data points to determine a plurality of density image values, each defined by the number of 2D image data points in said window;

using said density images obtained from said first frame and said second frame to determine at least one translation vector;

performing a coarse registration of said 3D point cloud data in at least one of an-XY plane and a Z plane using said at least one translation vector;

wherein said XY plane is defined by a plurality of points having common z values in a Cartesian coordinate system defined by an x, y, and z axis, and said Z plane is defined by a plurality of points in a plane that is normal to said XY plane.

2. The method according to claim 1, further comprising exclusively selecting for registration a sub-volume of said 3D point cloud data from each frame which sub-volume includes less than a total volume of said 3D point cloud data.

3. The method according to claim 1, further comprising selecting said density images for each of said first frame and said second frame to be an XY density images by setting to zero a z coordinate value of each data point in a 3D point cloud contained in said first and second frame.

4. The method according to claim 1, further comprising selecting said density images for said first frame and said second frame to be XZ density images by setting to zero a y coordinate value of each data point in a 3D point cloud contained in said first and second frame.

5. The method according to claim 1, further comprising filtering each of said density images to obtain a filtered density image for each of said first frame and said second frame, prior to determining said translation vector.

6. The method according to claim 5, wherein said step of determining said at least one translation vector further comprises performing a cross-correlation of said filtered density image obtained from said first frame and said filtered density image obtained from said second frame.

7. The method according to claim 6, further comprising determining said at least one translation vector based on a peak value resulting from the cross-correlation of said filtered density image from said first frame and said filtered density image of said second frame.

8. The method according to claim 1, further comprising performing a coarse registration of said 3D point cloud data from said first frame and said second frame in both said XY plane and in a Z axis direction.

9. The method according to claim 8, further comprising performing a fine registration process on said 3D point cloud data from said first frame and said second frame.

10. The method according to claim 9, wherein said fine registration process further comprises defining a plurality of sub-volumes within each of said first and second frames.

11. The method according to claim 10, wherein said fine registration process further comprises identifying one or more qualifying ones of said sub-volumes which include selected arrangements of 3D point cloud data.

## Patentansprüche

1. Verfahren zur Registrierung einer Vielzahl von Rahmen von dreidimensionalen, 3D-, Punktwolkendaten betreffend ein interessierendes Ziel, aufweisend:

Erlangen zumindest eines ersten Rahmens und eines zweiten Rahmens, von denen jeder 3D-Punktwolkendaten aufweist, die für ein ausgewähltes Objekt gesammelt wurden;

Erzeugen eines Dichtebildes für den ersten Rahmen bzw. den zweiten Rahmen mittels (a) Projizierens der 3D-Punktwolkendaten von dem ersten Rahmen sowie dem zweiten Rahmen auf eine zweidimensionale, 2D-, Ebene, um einen 2D-Rahmen von 2D-Bilddatenpunkten zu erhalten, und (b) Führens eines Fensters über den 2D-Rahmen der 2D-Bliddatenpunkte, um eine Vielzahl an Dichtebildwerten zu bestimmen, von denen jeder durch die Zahl von 2D-Bilddatenpunkten in dem Fenster definiert ist;

Verwenden der von dem ersten Rahmen und dem zweiten Rahmen erhaltenen Dichtebilder, um zumindest einen Translationsvektor zu bestimmen;

Durchführen einer groben Registrierung der 3D-Punktwolkendaten in einer XY-Ebene und/oder einer Z-Ebene unter Verwendung des zumindest einen Translationsvektors;

wobei die XY-Ebene durch eine Vielzahl von Punkten definiert ist, die gemeinsame z-Werte in einem kartesischen Koordinatensystem aufweisen, welches durch eine x-, y- und z-Achse definiert ist, und wobei die Z-Ebene durch eine Vielzahl von Punkten in einer Ebene, die normal zu der XY-Ebene ist, definiert ist.

2. Verfahren nach Anspruch 1, ferner aufweisend ein exklusives Auswählen, zur Registrierung, eines Teilvolumens der 3D-Punktwolkendaten von jedem Rahmen, wobei das Teilvolumen weniger als das Gesamtvolumen der 3D-Punktwolkendaten umfasst.

3. Verfahren nach Anspruch 1, ferner aufweisend ein Auswählen der Dichtebilder für den ersten Rahmen sowie den zweiten Rahmen, so dass sie XY-Dichtebilder sind, und zwar mittels Nullsetzens eines z-Koordinatenwerts jedes Datenpunkts in einer 3D-Punktwolke, die in dem ersten und zweiten Rahmen enthalten ist.

4. Verfahren nach Anspruch 1, ferner aufweisend ein Auswählen der Dichtebilder für den ersten Rahmen sowie den zweiten Rahmen, so dass sie XZ-Dichtebilder sind, und zwar mittels Nullsetzens eines y-Koordinatenwerts jedes Datenpunkts in einer 3D-Punktwolke, die in dem ersten und zweiten Rahmen enthalten ist.

5. Verfahren nach Anspruch 1, ferner aufweisend ein Filtern jedes der Dichtebilder, um ein gefiltertes Dichtebild für den ersten Rahmen sowie den zweiten Rahmen zu erhalten, und zwar vor einem Bestimmen des Translationsvektors.

6. Verfahren nach Anspruch 5, bei dem der Schritt des Bestimmens des mindestens einen Translationsvektors ferner ein Durchführen einer Kreuzkorrelation des gefilterten Dichtebilds, das von dem ersten Rahmen erlangt wurde, und des gefilterten Dichtebilds, das von dem zweiten Rahmen erlangt wurde, aufweist.

7. Verfahren nach Anspruch 6, ferner aufweisend ein Bestimmen des mindestens einen Translationsvektors beruhend auf einem Spitzenwert, der sich aus der Kreuzkorrelation des gefilterten Dichtebilds von dem ersten Rahmen und des gefilterten Dichtebilds von dem zweiten Rahmen ergibt.

8. Verfahren nach Anspruch 1, ferner aufweisend ein Durchführen einer groben Registrierung der 3D-Punktwolkendaten von dem ersten Rahmen und dem zweiten Rahmen in sowohl der XY-Ebene als auch in einer Z-Achsenrichtung.

9. Verfahren nach Anspruch 8, ferner aufweisend ein Durchführen eines feinen Registrierungsvorgangs an den 3D-Punktwolkendaten von dem ersten Rahmen und dem zweiten Rahmen.

10. Verfahren nach Anspruch 9, bei dem der feine Registrierungsvorgang ferner ein Definieren einer Vielzahl von Teilvolumina in dem ersten sowie dem zweiten Rahmen aufweist.

11. Verfahren nach Anspruch 10, bei dem der feine Registrierungsvorgang ferner ein Identifizieren von einem oder mehreren qualifizierenden der Teilvolumina, welche ausgewählte Anordnungen von 3D-Punktwolkendaten umfassen, aufweist.

## Revendications

1. Procédé de repérage d'une pluralité de trames de données de nuage de points tridimensionnel (3D) concernant une cible d'intérêt, comprenant :

   l'acquisition d'au moins une première trame et une deuxième trame, contenant chacune des données de nuage de points 3D collectées pour un objet sélectionné ;
   la création d'une image en densité pour chacune de ladite première trame et de ladite deuxième trame respectivement (a) en projetant lesdites données de nuage de points 3D de chacune de ladite première trame et de ladite deuxième trame sur un plan bidimensionnel (2D) de manière à obtenir une trame 2D de points de données d'image 2D, et (b) en faisant passer une fenêtre sur ladite trame 2D desdits points de données d'image 2D pour déterminer une pluralité de valeurs d'image en densité, chacune définie par le nombre de points de données d'image 2D dans ladite fenêtre ;
   l'utilisation desdites images en densité obtenues à partir de ladite première trame et de ladite deuxième trame pour déterminer au moins un vecteur de translation ;
   l'exécution d'un repérage grossier desdites données de nuage de points 3D dans au moins l'un d'un plan XY et d'un plan Z en utilisant ledit au moins un vecteur de translation ;
   dans lequel ledit plan XY est défini par une pluralité de points ayant des valeurs z communes dans un système de coordonnées cartésiennes défini par des axes x, y et z, et ledit plan Z est défini par une pluralité de points dans un plan qui est normal audit plan XY.

2. Procédé selon la revendication 1, comprenant en outre la sélection exclusive pour repérage d'un sous-volume desdites données de nuage de points 3D à partir de chaque trame, lequel sous-volume inclut moins d'un volume total desdites données de nuage de points 3D.

3. Procédé selon la revendication 1, comprenant en outre la sélection desdites images en densité pour chacune de ladite première trame et de ladite deuxième trame pour être des images en densité XY en fixant à zéro une valeur de coordonnée z de chaque point de données dans un nuage de points 3D contenu dans lesdites première et deuxième trames.

4. Procédé selon la revendication 1, comprenant en outre la sélection desdites images en densité pour ladite première trame et ladite deuxième trame pour être des images en densité XY en fixant à zéro une valeur de coordonnée y de chaque point de données dans un nuage de points 3D contenu dans lesdites première et deuxième trames.

5. Procédé selon la revendication 1, comprenant en outre le filtrage de chacune desdites images en densité pour obtenir une image en densité filtrée pour chacune de ladite première trame et de ladite deuxième trame, avant la détermination dudit vecteur de translation.

6. Procédé selon la revendication 5, dans lequel l'étape de détermination dudit au moins un vecteur de translation comprend en outre l'exécution d'une corrélation croisée de ladite image en densité filtrée obtenue à partir de ladite première trame et de ladite image en densité filtrée obtenue à partir de ladite deuxième trame.

7. Procédé selon la revendication 6, comprenant en outre la détermination dudit au moins un vecteur de translation sur la base d'une valeur de pic résultant de la corrélation croisée de ladite image en densité filtrée à partir de ladite première trame et de ladite image en densité filtrée à partir de ladite deuxième trame.

8. Procédé selon la revendication 1, comprenant en outre l'exécution d'un repérage grossier desdites données de nuage de points 3D à partir de ladite première trame et de ladite deuxième trame à la fois dans ledit plan XY et dans un sens de l'axe Z.

9. Procédé selon la revendication 8, comprenant en outre l'exécution d'un processus de repérage fin sur lesdites données de nuage de points 3D à partir de ladite première trame et de ladite deuxième trame.

10. Procédé selon la revendication 9, dans lequel ledit processus de repérage fin comprend en outre la définition d'une pluralité de sous-volumes au sein de chacune desdites première et deuxième trames.

11. Procédé selon la revendication 10, dans lequel ledit processus de repérage fin comprend en outre l'identification d'un ou plusieurs sous-volumes qualifiants parmi lesdits sous-volumes qui inclut/incluent des agencements sélectionnés de données de nuage de points 3D.

FIG. 1

FIG. 2A

FIG. 2B

## FIG. 2C

## FIG. 2D

FIG. 2E

FIG. 2F

300

302 — Obtain data comprising reference frame i

304 — Obtain data comprising frame j

400 — Perform coarse XY registration process to coarsely register data for frame j to reference frame i

500 — Perform coarse Z registration process to coarsely register data for frame j to reference frame i

600 — Coarse registration done for all *n* frames?

No → $j = j + 1$   602

Yes

700 — Perform fine registration process to determine global $R_jT_j$ for aligning frame j to frame i using a simultaneous approach

800 — Transform all frames using $R_jT_j$ for $j = 1 \ldots n$

900 — Done

FIG. 3

400

```
                    ┌─────────────────────┐
                    │ Horizontally slice frames i │
                    │ and j to acquire (for each  │
                    │   frame i, j) a set of points│
         402        │ contained in a sub-volume  │
                    │    of the total frame       │
                    └─────────────────────┘
                              │
                              ▼
                    ┌─────────────────┐
         404        │  Project points  │
                    │   from 3D point  │
                    │ cloud to x, y plane│
                    └─────────────────┘
                              │
                              ▼
                    ┌─────────────────┐
         405        │    Create XY     │
                    │ Density Images   │
                    │  for frames i, j │
                    └─────────────────┘
                              │
                              ▼
                    ┌─────────────────┐
         406        │  Create filtered │
                    │  density images  │
                    │   for frames i, j│
                    └─────────────────┘
                              │
                              ▼
                    ┌─────────────────┐
         408        │   Determine XY   │
                    │ translation error│
                    └─────────────────┘
                              │
                              ▼
                    ┌─────────────────┐
         410        │    Adjust in     │
                    │   XY-direction   │
                    └─────────────────┘
```

FIG. 4

500

502 — Vertically slice frames i and j to acquire (for each frame i, j) a set of points contained in a sub-volume of the total frame

504 — Project points from 3D point cloud to x, z plane

505 — Create XZ Density Images for frames i, j

506 — Create filtered density images for frames i, j

508 — Determine Z translation error

510 — Adjust in Z-direction

# FIG. 5

| Ranges | Blob-test (1) | Planar (Inf) -Line (0) test | Line test (0) |
|---|---|---|---|
| Metric | $\lambda_3\ /\ \sqrt{(\lambda_2\lambda_1)}$ | $\lambda_1 / \lambda_3$ | $\lambda_2 / \lambda_1$ |
| Line | 0 | Inf | 0.0 |
| Plane | 0 | Inf | 0.9 |
| Curve | 0.5 | 2.1 | 0.9 |
| Blob | 1.0 | 1.0 | 1.0 |

# FIG. 6

700

710 — Divide all coarsely registered frames into sub-volumes

720 — Perform eigen analysis of point cloud data contained in sub-volumes of all frames

730 — Use results from eigen-analysis to identify qualifying sub-volumes of each frame that contain specific types of point cloud data which are most useful for fine registration

740 — For each qualifying sub-volume, identify corresponding pairs of data points in frame pairs by finding a data point from frame j that most closely matches the position of each data point from frame i

750 — Use an optimization routine to find a global rotation and translation vector $(R_j T_j)$ for frame j that simultaneously (for all frames) minimizes the error for all the corresponding pairs of data points

FIG. 7

Projection of Selected 3D Point Cloud Data to XY Plane - Frame i

Projection of Selected 3D Point Cloud Data to XY Plane - Frame j

FIG. 8A

FIG. 8B

EP 2 272 045 B1

XY Density Image - Frame i

FIG. 9A

XY Density Image - Frame j

FIG. 9B

EP 2 272 045 B1

Before Median Filtering - Frame j

After Median Filtering Frame j

FIG. 10A

FIG. 10B

EP 2 272 045 B1

Before Sobel Filtering - Frame j

After Sobel Filtering Frame j

FIG. 11A

FIG. 11B

EP 2 272 045 B1

FIG. 12

Correlation Peak

Projection of Selected 3D Point Cloud Data to XZ Plane - Frame i

Projection of Selected 3D Point Cloud Data to XZ Plane - Frame j

FIG. 13A

FIG. 13B

EP 2 272 045 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050243323 A

**Non-patent literature cited in the description**

- **Postolov et al.** Registration of airborne laser data to surface generated by photogrammetric means. *INTERNATIONAL ARCHIVES OF PHOTOGRAMMETRY AND REMOTE SENSING,* November 1999